(19) Europäisches Patentamt
European Patent Office
Office européen des brevets

(11) EP 2 894 778 A1

(12) EUROPEAN PATENT APPLICATION

(43) Date of publication:
15.07.2015 Bulletin 2015/29

(51) Int Cl.:
H02M 1/12 $^{(2006.01)}$   H02M 7/48 $^{(2007.01)}$
H02J 3/36 $^{(2006.01)}$   H02M 7/5387 $^{(2007.01)}$

(21) Application number: 14275007.4

(22) Date of filing: 13.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALSTOM Technology Ltd
5400 Baden (CH)

(72) Inventor: Oates, Colin Donald Murray
Brocton
Staffordshire ST17 0TL (GB)

(74) Representative: Marshall, Caroline
Potter Clarkson LLP
Patents
The Belgrave Centre
Talbot Street
Nottingham Nottinghamshire NG1 5GG (GB)

(54) **A controller for a voltage source converter**

(57) A controller (40), for controlling a multiphase voltage source converter, comprises a vector control module (42) that is configured to generate multiphase voltage demand waveforms ($v_a$, $v_b$, $v_c$) that the voltage source converter subsequently is required to provide. The vector control module (42) generates the multiphase voltage demand waveforms ($v_a$, $v_b$, $v_c$) from respective converter voltage output phase waveforms ($V_a$, $V_b$, and $V_c$) that are measured at corresponding AC outputs of the voltage source converter. The vector control module (42) includes a transformation element (44) which is configured to transform the respective converter voltage output phase waveforms ($V_a$, $V_b$, and $V_c$) into symmetrical sequence rotating reference frame terms. The vector control module (42) also includes a distortion element (46) that is configured to introduce harmonic distortion into the generated multiphase demand waveforms ($v_a$, $v_b$, $v_c$). The distortion element (46) includes a time-varying conversion element (48) that is configured to convert the symmetrical sequence terms directly into respective time-varying waveforms (58, 60, 62, 68, 70, 72), and a manipulation element (74) which is configured to carry out non-trigonometric manipulation of the time-varying waveforms (58, 60, 62, 68, 70, 72) to introduce the said harmonic distortion into the generated multiphase voltage demand waveforms ($v_a$, $v_b$, $v_c$).

Figure 2

**Description**

This invention relates to a controller for a voltage source converter which forms part of a high voltage power transmission network. The invention also relates to a voltage source converter including such a controller, and to a power transmission network which includes such a voltage source converter.

In high voltage direct current (HVDC) power transmission networks alternating current (AC) power is typically converted to direct current (DC) power for transmission via overhead lines and/or under-sea cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion of DC power to AC power is utilized in power transmission networks where it is necessary to interconnect the DC and AC electrical networks. In any such power transmission network, converters are required at each interface between AC and DC power to effect the required conversion; AC to DC or DC to AC. One such power converter is a voltage source converter.

Voltage source converters need to be controlled to efficiently transmit power between the AC and DC networks.

One way in which such voltage source converters may be controlled is by so-called vector control which simplifies the representation of20 multiphase power transmission networks.

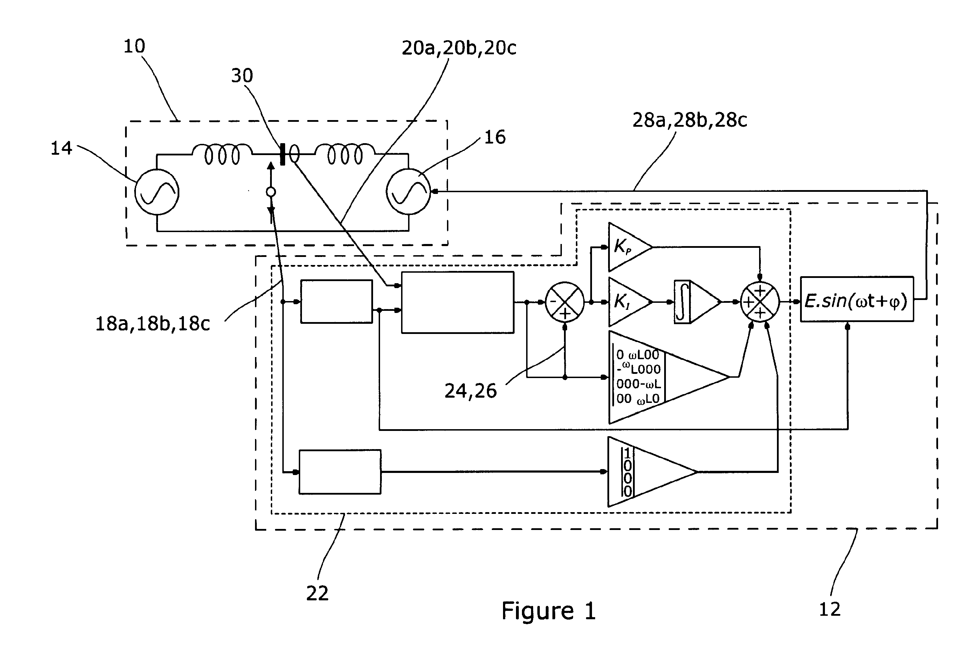

Figure 1 shows a schematic view of an AC portion 10 of a typical power transmission network, together with an associated conventional vector control module 12. The AC portion 10 of the network includes an AC network 14 which is electrically coupled to a voltage source converter 16 via a point of common coupling (PCC) 30.

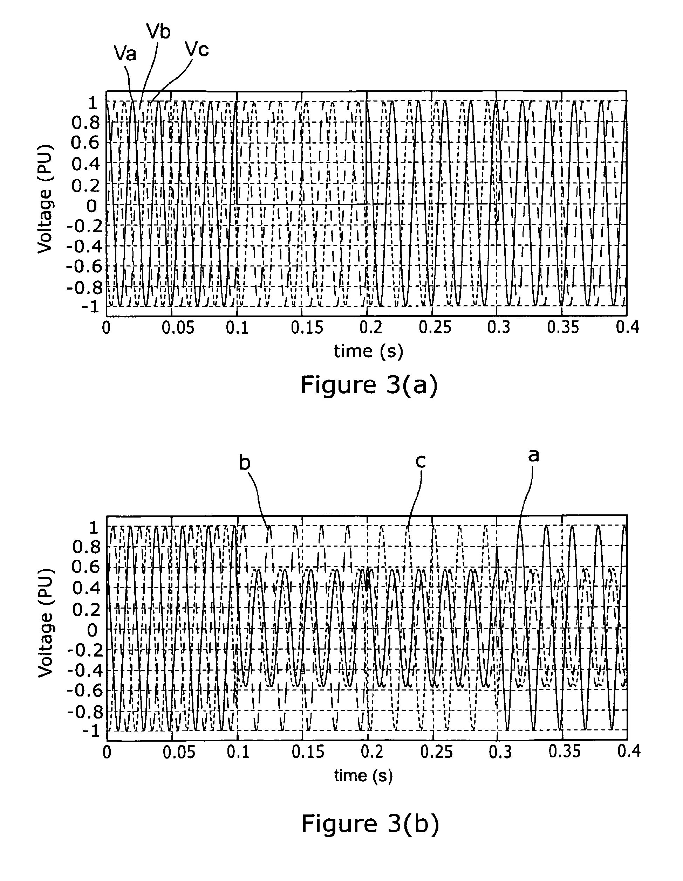

The vector control module 12 measures various output characteristics of the voltage source converter 16 including output voltage and current waveforms. In a multiphase AC portion 10 the vector control module 12 measures the aforementioned voltage and current waveforms for each output phase of the voltage source converter 16. For example, in a three phase converter 16 having phases *a*, *b*, *c*, such as the one shown in Figure 3, the vector control module would measure three separate voltage output phase waveforms 18a, 18b, 18c, and three separate current output phase waveforms 20a, 20b, 20c.

In order to simplify the representation of the various converter output phase waveforms 18a, 18b, 18c, 20a, 20b, 20c the vector control module 12 often includes a transformation element 22 which converts each respective converter output phase waveform 18a, 18b, 18c, 20a, 20b, 20c into symmetrical sequence rotating reference frame terms. Such symmetrical sequence terms include positive *p* sequence, negative *n* sequence and zero sequence variables which when taken separately transform into symmetrical sets of voltages or currents.

The rotating reference frame has direct *d*, i.e. real, and quadrature *q*, i.e. imaginary, axes that rotate at a frequency $\omega t$ which is the instantaneous reference power frequency at which the voltage source converter 16 is operating. As such each of the positive *p* sequence, negative *n*, sequence and zero sequence variables has a direct *d* and quadrature *q* component.

The vector control module 12 also receives voltage demand and current demand waveforms 24, 26 which are similarly in the form of symmetrical sequence terms. The vector control module 12 uses the symmetrical sequence terms for one or more of the voltage and current demand waveforms 24, 26, along with the symmetrical sequence terms for the corresponding measured converter output phase waveforms 18a, 18b, 18c, 20a, 20b, 20c, to generate respective phase voltage demand waveforms 28a, 28b, 28c that each phase of the voltage source converter 16 subsequently is required to provide.

The conventional vector control module 12 therefore provides feedback control that modifies each of the voltage output phase waveforms 18a, 18b, 18c and current output phase waveforms 20a, 20b, 20c of the voltage source converter 16 so that they match desired, i.e. demanded, waveforms.

According to a first aspect of the invention there is provided a controller, for controlling a multiphase voltage source converter, comprising a vector control module configured to generate multiphase voltage demand waveforms that the voltage source converter subsequently is required to provide, the vector control module generating the multiphase voltage demand waveforms from respective converter voltage output phase waveforms measured at corresponding AC outputs of the voltage source converter, the vector control module including:

a transformation element configured to transform the respective converter voltage output phase waveforms into symmetrical sequence rotating reference frame terms; and
a distortion element configured to introduce harmonic distortion into the generated multiphase demand waveforms, the distortion element including:

a time-varying conversion element configured to convert the symmetrical sequence terms directly into respective time-varying waveforms; and
a manipulation element configured to carry out non-trigonometric manipulation of the time-varying waveforms to introduce the said harmonic distortion into the generated multiphase voltage demand waveforms.

The inclusion of a distortion element advantageously introduces harmonic distortion into each of the generated multiphase voltage demand waveforms. This reduces the peak of each voltage demand waveform and, in turn, allows the fundamental voltage waveform of the voltage source converter, i.e. the overall voltage output of the voltage source converter when each of the individual converter output phase waveforms are taken together, to rise above the voltage of a DC network connected to the voltage source converter (which ordinarily the fundamental voltage is not able to do because of the clamping effect of various anti-parallel diodes associated with the semiconductor switches that normally form a part of the voltage source converter).

Conduction losses within a voltage source converter are dependent on the level of AC current which passes through the converter, and so an increase in the fundamental voltage at which the converter is operating and the commensurate decrease in fundamental current passing through the converter (for a given degree of power transfer) result in a reduction in the conduction losses.

Moreover, the provision of a distortion element having respective time-varying conversion and manipulation elements, which together introduce the desirable harmonic distortion into the generated multiphase voltage demand waveforms without the need for any trigonometric manipulation, means that such a reduction in conduction losses is achieved without the need for complex, processor intensive and time-consuming control calculations for each phase of the converter, a control burden which might otherwise disrupt the real-time operation of the converter.

Preferably the time-varying conversion element is configured to utilise only instantaneous reference terms when converting the symmetrical sequence terms into respective time-varying waveforms.

Such instantaneous reference terms may be used in other aspects of controlling a multiphase voltage source converter and so typically are provided via separate monitoring functions. Utilising only such terms when producing the time-varying waveforms therefore reduces the processing burden associated with the vector control module and so permits it to generate the multiphase voltage demand waveforms in a quick and efficient manner.

Optionally the time-varying conversion element is configured to utilise only sine and cosine instantaneous reference terms when converting the symmetrical sequence terms into the respective time-varying waveforms.

Such sine and cosine instantaneous reference terms, e.g. $\sin(\omega t)$ and $\cos(\omega t)$, can be provided relatively easily by conventional monitoring functions such as a Phase Locked Loop (PLL), and so avoid the need for the vector control module to calculate complex and time-consuming alternatives.

In addition, they provide a convenient means of introducing the required time-based component into the resulting time-varying waveforms, i.e. the instantaneous reference power frequency $\omega t$ at which the voltage source converter is operating.

The time-varying conversion element may be configured to combine the sine and cosine instantaneous reference terms with a matrix multiplication operation to convert the symmetrical sequence terms into the respective time-varying waveforms.

Matrix multiplication can be carried out simply and straightforwardly in real time with little processing overhead, and so helps to maintain the efficiency with which the distorted multiphase voltage demand waveforms are generated.

In a preferred embodiment of the invention the time-varying conversion element is configured to combine the sine and cosine instantaneous reference terms with a matrix multiplication operation to convert the symmetrical sequence terms into respective time-varying waveforms which vary with respect to time at a frequency equal to an instantaneous reference power frequency plus an offset.

The inclusion of such an offset, e.g. $\varphi$, ultimately permits the distorted multiphase voltage demand waveforms to control the fundamental voltage output of the converter, i.e. each of the respective contributing converter voltage output phase waveforms, in a manner which additionally helps to ensure that the converter also provides a desired level of fundamental AC current.

Moreover, incorporating the offset by way of this conversion avoids the need to determine the offset separately by way of a trigonometric manipulation, such as a $\tan^{-1}$ function, which is complex and would therefore impose a considerable processing burden on the vector control module.

Optionally the time-varying conversion element is configured to convert the symmetrical sequence terms into at least a group of real time-varying waveforms.

The creation of at least a group of real, i.e. direct d based, time-varying waveforms provides the manipulation element with a minimum necessary input to allow it to introduce a desired degree of harmonic distortion into the generated multiphase voltage demand waveforms.

Preferably the time-varying conversion element is configured to convert at least the positive and negative terms of the symmetrical sequence into respective real time-varying waveforms according to the formula:

$$x_R = \left[ \begin{bmatrix} 1 & 0 & 1 & 0 \\ -\dfrac{1}{2} & \dfrac{\sqrt{3}}{2} & -\dfrac{1}{2} & -\dfrac{\sqrt{3}}{2} \\ -\dfrac{1}{2} & -\dfrac{\sqrt{3}}{2} & -\dfrac{1}{2} & \dfrac{\sqrt{3}}{2} \end{bmatrix} \cos(\omega t) + \begin{bmatrix} 0 & -1 & 0 & -1 \\ \dfrac{\sqrt{3}}{2} & \dfrac{1}{2} & -\dfrac{\sqrt{3}}{2} & \dfrac{1}{2} \\ -\dfrac{\sqrt{3}}{2} & \dfrac{1}{2} & \dfrac{\sqrt{3}}{2} & \dfrac{1}{2} \end{bmatrix} \sin(\omega t) \right] \cdot \begin{bmatrix} x_d^p \\ x_q^p \\ x_d^n \\ x_q^n \end{bmatrix}$$

where,

$x_R$ is a respective real time-varying waveform;

$\omega t$ is the instantaneous time-varying phase associated with the reference power frequency $\omega$;

$x_d^p$ is the direct positive sequence term of the symmetrical sequence;

$x_q^p$ is the quadrature positive sequence term of the symmetrical sequence;

$x_d^n$ is the direct negative sequence term of the symmetrical sequence; and $x_q^n$ is the quadrature negative sequence term of the symmetrical sequence.

Generating a respective time-varying waveform simply involving the multiplication and addition of known integers and of instantaneous reference terms which are provided by routine monitoring of the converter output has a very low processing overhead and as such is much quicker and more efficient than, for example, carrying out a $\tan^{-1}$ trigonometric manipulation.

In another preferred embodiment of the invention the time-varying conversion element is configured to convert at least the positive and negative terms of the symmetrical sequence into respective real time-varying waveforms of the form

$$x_{waveform} = V \cos(\omega t + \varphi)$$

where,

$V$ is the magnitude of the corresponding output converter voltage output phase waveform from which the respective symmetrical sequence terms and respective time-varying waveform are derived;

$\omega t$ is the instantaneous time-varying phase associated with the reference power frequency $\omega$; and

$\varphi$ is the offset in converter output AC voltage required to allow the converter to provide a correct amount of AC current.

Such a conversion of the symmetrical sequence terms desirably incorporates the offset $\varphi$ in converter output AC voltage without the need for this to be determined separately using a complex and processing intensive function.

In a still further preferred embodiment of the invention the time-varying conversion element is additionally configured to convert the symmetrical sequence terms into a group of imaginary time-varying waveforms.

The ability to additionally provide the manipulation element with a group of imaginary time-varying waveforms reduces the number of subsequent manipulations the manipulation element has to carry out in order to introduce a desired degree of harmonic distortion into the generated multiphase voltage demand waveforms, and so further increases the speed and efficiency with which the vector control module is able to generate the said distorted multiphase voltage demand waveforms.

The time-varying conversion element may be configured to convert at least the positive and negative terms of the symmetrical sequence into respective imaginary time-varying waveforms according to the formula:

$$x_I = \left[ \begin{bmatrix} 0 & 1 & 0 & 1 \\ -\dfrac{\sqrt{3}}{2} & -\dfrac{1}{2} & \dfrac{\sqrt{3}}{2} & -\dfrac{1}{2} \\ \dfrac{\sqrt{3}}{2} & -\dfrac{1}{2} & -\dfrac{\sqrt{3}}{2} & -\dfrac{1}{2} \end{bmatrix} \cos(\omega t) + \begin{bmatrix} 1 & 0 & 1 & 0 \\ -\dfrac{1}{2} & \dfrac{\sqrt{3}}{2} & -\dfrac{1}{2} & -\dfrac{\sqrt{3}}{2} \\ -\dfrac{1}{2} & -\dfrac{\sqrt{3}}{2} & -\dfrac{1}{2} & \dfrac{\sqrt{3}}{2} \end{bmatrix} \sin(\omega t) \right] \cdot \begin{bmatrix} x_d^p \\ x_q^p \\ x_d^n \\ x_q^n \end{bmatrix}$$

where,

$x_I$ is a respective imaginary time-varying waveform;

$\omega t$ is the instantaneous time-varying phase associated with the reference power frequency $\omega$;

$x_d^p$ is the direct positive sequence term of the symmetrical sequence;

$x_q^p$ is the quadrature positive sequence term of the symmetrical sequence;

$x_d^n$ is the direct negative sequence term of the symmetrical sequence; and $x_q^n$ is the quadrature negative sequence term of the symmetrical sequence.

Such conversion utilises only multiplication and addition of known integers and known instantaneous reference terms and so carries a much lower processing burden than, e.g. carrying out a $\tan^{-1}$ trigonometric manipulation.

Preferably the time-varying conversion element is configured to convert at least the positive and negative terms of the symmetrical sequence into respective imaginary time-varying waveforms of the form

$$x_{waveform} = V \, \sin(\omega t + \varphi)$$

where,

$V$ is the magnitude of the corresponding output converter voltage output phase waveform from which the respective symmetrical sequence terms and respective time-varying waveform are derived;

$\omega t$ is the instantaneous time-varying phase associated with the reference power frequency $\omega$; and

$\varphi$ is the offset in converter output AC voltage required to allow the converter to provide a correct amount of AC current.

Such conversion by the time-varying conversion element desirably introduces the offset $\varphi$ into the respective imaginary time-varying waveforms and so obviates the need to determine this separately and thereby also avoids imposing the associated processing burden.

Optionally the manipulation element includes a scaling module configured to combine respective corresponding real and imaginary time-varying waveforms produced by the time-varying conversion element and convert them into a single scalar waveform representative of the magnitude of the corresponding converter voltage output phase waveform from which the respective real and imaginary time-varying waveforms are derived.

Such scaling of the real and imaginary time-varying waveforms corresponding to a given converter voltage output phase waveform facilitates subsequent manipulation of the real and imaginary time-varying waveforms within the manipulation element in an efficient manner.

In a still further embodiment of the invention the manipulation element also includes a manipulating module which is configured to:

(i) combine a respective imaginary time-varying waveform with the corresponding scalar waveform to generate a first output waveform of the form

$$v_{output\ waveform} = \sin(\omega t + \varphi);$$

(ii) further modify the first output waveform via multiplication and addition only to generate a modified output waveform of the form

$$v_{modified\ waveform} = \frac{5}{6} + \frac{2}{3} \, \sin^2(\omega t + \varphi);$$

and

(iii) combine the modified output waveform with the corresponding respective real time-varying waveform to generate a respective distorted voltage demand waveform of the form

$$v_{demand\,waveform} = V\left[\cos(\omega t + \varphi) + \frac{1}{6}\cos(3(\omega t + \varphi))\right].$$

The inclusion of such a manipulating module configured in the aforementioned manner results in each multiphase voltage demand waveform desirably including a third harmonic distortion, i.e. $\cos(3(\omega t + \varphi))$ which has a magnitude of $\frac{1}{6}$ the magnitude $V$ of the corresponding converter voltage output phase waveform from which the respective symmetrical sequence terms and respective time-varying waveform are derived.

Such a third harmonic distortion provides an optimum impact on the possible increase of the fundamental voltage waveform of the voltage source converter above the voltage of a DC network connected to the voltage source converter, and hence an optimum impact on the associated reduction in conduction losses.

Furthermore, such third harmonic distortion may be readily removed from the converter voltage output phase waveforms (and hence also removed from the converter output fundamental voltage waveform) by the inherent filtering effect of, e.g. a star/delta transformer which is often included in a high voltage power transmission network to interconnect a voltage source converter and an associated AC network.

Optionally the manipulating module is additionally configured to:

(iv) combine a respective real time-varying waveform with the corresponding scalar waveform to generate a further output waveform of the form

$$v_{further\,output\,waveform} = \cos(\omega t + \varphi).$$

Such a waveform, and more particularly the characteristics of the converter that it represents, is useful in controlling other aspects of the converter operation, e.g. balancing the level of energy in the energy storage devices within each phase limb of the converter.

According to a second aspect of the invention there is provided a voltage source converter including a controller as described hereinabove.

According to a third aspect of the invention there is provided a power transmission network including a voltage source converter described hereinabove.

Each of the foregoing shares the benefits associated with the corresponding feature of the controller.

There now follows a brief description of preferred embodiments of the invention, by way of non-limiting example, with reference being made to the accompanying figures in which:

Figure 1 shows a schematic view of an AC portion of a typical power transmission network together with an associated conventional vector control module;
Figure 2 shows a schematic view of a controller according to a first embodiment of the invention;
Figure 3(a) shows respective voltage output phase waveforms for each phase of the converter controlled by the controller shown in Figure 2;
Figure 3(b) shows each of the voltage output phase waveforms shown in Figure 3(a) after passing through a filtering device;
Figure 4 shows respective voltage profiles representing the magnitude of positive and negative sequence variables of a set symmetrical sequence terms corresponding to a given converter voltage output phase waveform;
Figure 5 shows a practical manner in which symmetrical sequence terms can be converted by the controller shown in Figure 2 into respective real time-varying waveforms;
Figure 6 shows the respective real time-varying waveforms obtained by the conversion illustrated in Figure 5;
Figure 7 shows a practical manner in which symmetrical sequence terms can be converted by the controller shown in Figure 2 into respective imaginary time-varying waveforms;
Figure 8 shows the respective imaginary time-varying waveforms obtained by the conversion illustrated in Figure 7;
Figure 9 shows scalar waveforms corresponding to respective scalar factors established by the controller shown in Figure 2;
Figure 10 shows respective first output waveforms from a manipulating module;
Figure 11 shows a respective modified output waveforms from the manipulating module; and
Figure 12 shows respective voltage demand waveforms generated by the controller shown in Figure 2.

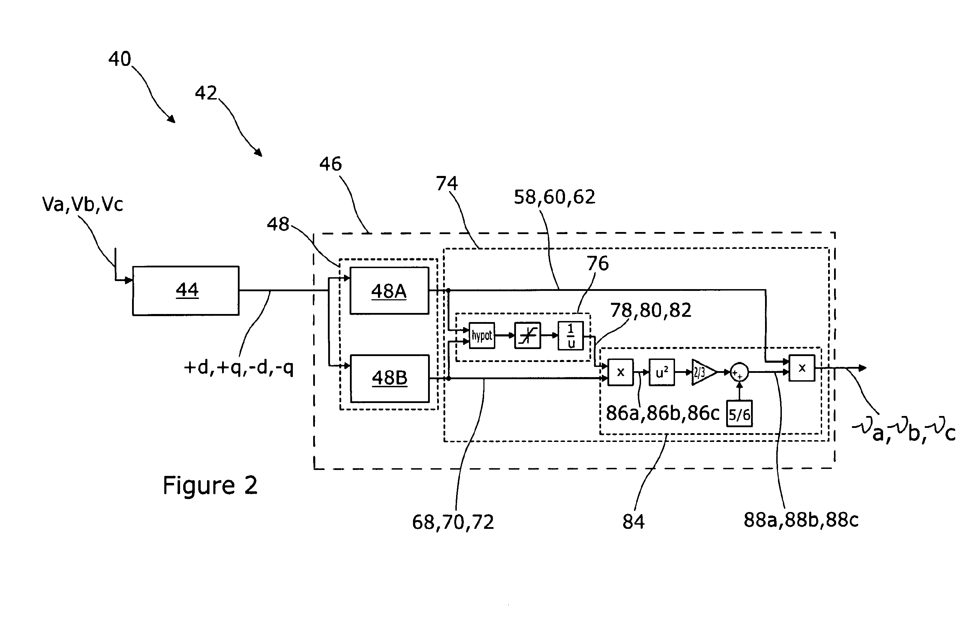

A controller according to a first embodiment of the invention is illustrated schematically in Figure 2, and is designated generally therein by reference numeral 40.

The controller 40 controls a three phase voltage source converter (not shown) and as such includes a vector control module 42 which is configured to generate three voltage demand waveforms $v_a$, $v_b$, and $v_c$ (corresponding to each phase $a$, $b$, $c$ of the converter) that the voltage source converter subsequently is required to provide.

The vector control module 42 generates the voltage demand waveforms $v_a$, $v_b$, and $v_c$ from three respective, corresponding converter voltage output phase waveforms $V_a$, $V_b$, and $V_c$, as shown in Figure 3(a), which are measured at corresponding AC voltage outputs (not shown) of the voltage source converter.

In other embodiments of the invention the controller 40 may control a voltage source converter having more than or less than three phases, such that a correspondingly different number of voltage demand waveforms are generated from a correspondingly different number of converter voltage output phase waveforms.

The components of the vector control module 42 and the manner in which it generates the said voltage demand waveforms $v_a$, $v_b$, and $v_c$ are described in more detail below.

The vector control module 42 includes a transformation element 44 that is configured in a conventional manner to transform each of the three converter voltage output phase waveforms $V_a$, $V_b$, and $V_c$ into separate, corresponding sets of symmetrical sequence rotating reference terms.

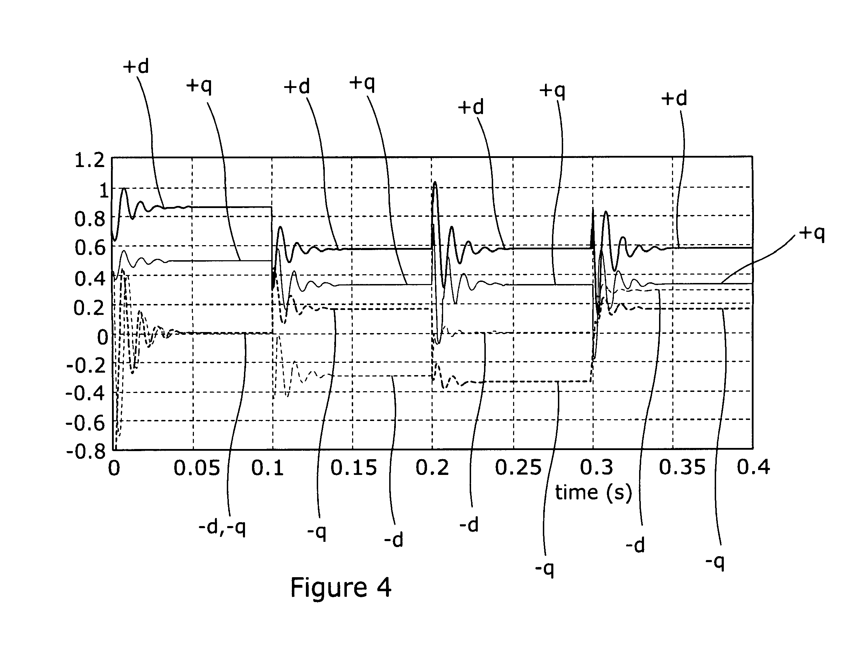

In the embodiment shown, after the converter voltage output phase waveforms $V_a$, $V_b$, and $V_c$ are measured they pass through a filtering device in the form of a star/delta transformer, although this need not always be the case. Such filtering of the converter voltage output phase waveforms $V_a$, $V_b$, and $V_c$ results in the respective waveforms a, b, c shown in Figure 3(b) which each has some voltage present. This means that the subsequent transformation of each filtered waveform a, b, c into symmetrical sequence terms gives rise only to positive $p$ and negative n sequence variables, i.e. only $+d$, $+q$, $-d$, $-q$ terms and does not give rise to zero sequence variables. Figure 4 shows the voltage profile corresponding to the magnitude of each positive and negative direct and quadrature term $+d$, $+q$, $-d$, $-q$ for a single converter voltage output phase waveform $V_a$, $V_b$, and $V_c$.

By convention, the direct $d$ and quadrature $q$ axes of the rotating reference frame are considered to rotate at a frequency $\omega$ which is the instantaneous reference power frequency at which the voltage source converter is operating.

The vector control module 42 may, optionally, receive voltage demand and current demand values which it combines with the converter output phase waveforms $V_a$, $V_b$, and

$V_c$ such that the resulting separate, corresponding sets of symmetrical sequence terms incorporate such voltage and current demand values.

The vector control module 42 also includes a distortion element 46 that is configured to introduce harmonic distortion into the generated voltage demand waveforms $v_a$, $v_b$, and $v_c$.

The distortion element 46 includes a time-varying conversion element 48 which is configured to convert each set of symmetrical sequence terms, i.e. the $+d$, $+q$, $-d$, $-q$ terms shown as representative voltage profiles in Figure 4, directly into respective time-varying waveforms.

More particularly the time-varying conversion element 48 includes a first module 48A which is configured to convert the sets of symmetrical sequence terms into a group of real, i.e. direct $d$, time-varying waveforms 58, 60, 62, and a second module 48B that is configured to convert the sets of symmetrical sequence terms into a group of imaginary, i.e. quadrature $q$, time-varying waveforms 68, 70, 72.

In other embodiments of the invention the time-varying conversion element 48 may include only a first module 48A configured to convert the sets of symmetrical sequence terms into a group of real time-varying waveforms 58, 60, 62..

The first module 48A of the time-varying conversion element 48 converts the positive $p$ and negative $n$ terms of the sets of symmetrical sequence terms into respective real time-varying waveforms 58, 60, 62 according to the formula:

$$x_R = \left[ \begin{bmatrix} 1 & 0 & 1 & 0 \\ -\dfrac{1}{2} & \dfrac{\sqrt{3}}{2} & -\dfrac{1}{2} & -\dfrac{\sqrt{3}}{2} \\ -\dfrac{1}{2} & -\dfrac{\sqrt{3}}{2} & -\dfrac{1}{2} & \dfrac{\sqrt{3}}{2} \end{bmatrix} \cos(\omega t) + \begin{bmatrix} 0 & -1 & 0 & -1 \\ \dfrac{\sqrt{3}}{2} & \dfrac{1}{2} & -\dfrac{\sqrt{3}}{2} & \dfrac{1}{2} \\ -\dfrac{\sqrt{3}}{2} & \dfrac{1}{2} & \dfrac{\sqrt{3}}{2} & \dfrac{1}{2} \end{bmatrix} \sin(\omega t) \right] \cdot \begin{bmatrix} x_d^p \\ x_q^p \\ x_d^n \\ x_q^n \end{bmatrix}$$

where,

$x_R$ is a respective real time-varying waveform 58, 60, 62;

$\omega t$ is the instantaneous time-varying phase associated with the reference power frequency $\omega$ at which the reference frame of the symmetrical sequence terms is rotating, i.e. the reference frequency at which the converter under control is operating;

$x_d^p$ is the direct positive sequence term +*d* of the symmetrical sequence;

$x_q^p$ is the quadrature positive sequence term +*q* of the symmetrical sequence;

$x_d^n$ is the direct negative sequence term -*d* of the symmetrical sequence; and

$x_q^n$ is the quadrature negative sequence term -*q* of the symmetrical sequence.

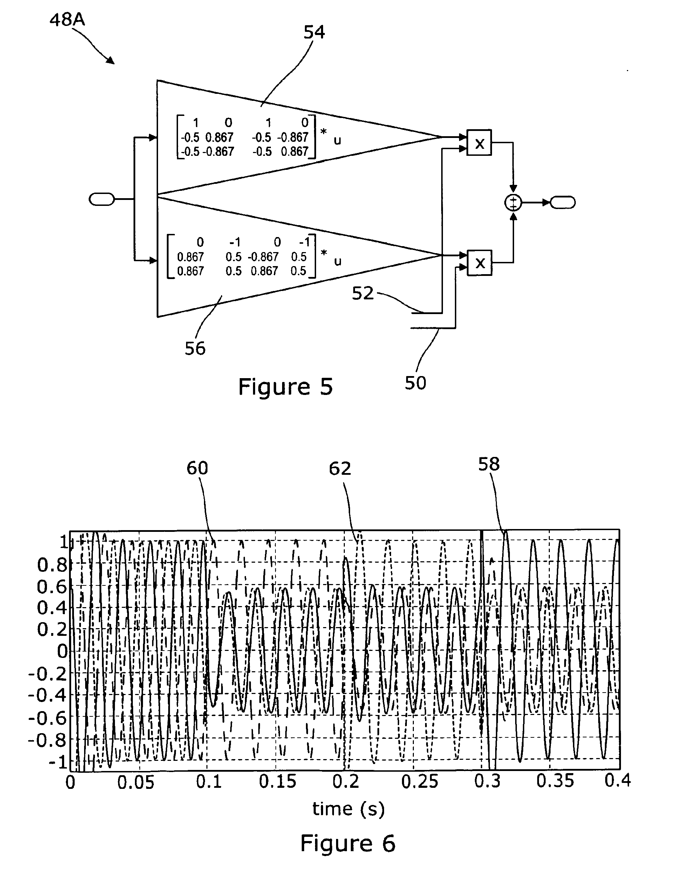

Figure 5 illustrates schematically a practical manner in which such conversion may be achieved, with the sine and cosine instantaneous reference terms 50, 52, i.e. sin(ω*t*) and cos(ω*t*), being provided by a conventional monitoring function in the form of a Phase Locked Loop (PLL).

In the foregoing manner, it can be seen that the first module 48A of the time-varying conversion element 48 utilises only instantaneous references terms, and more particularly only sine and cosine instantaneous reference terms 50, 52, when carrying out the conversion to respective real time-varying waveforms 58, 60, 62.

In addition, Figure 5 shows that the time-varying conversion element 48 combines the cosine instantaneous reference term 52 with a first matrix multiplication operation 54, and the sine instantaneous reference term 50 with a second matrix multiplication operation 56 when converting the symmetrical sequence terms into the respective real time-varying waveforms 58, 60, 62.

Utilising the conversion formula set out above results in the first module 48A of the time-varying conversion element 48 converting the positive *p* and negative *n* terms of the sets of symmetrical sequences into respective real time-varying waveforms 58, 60, 62 of the form

$$x_{waveform} = V \cos(\omega t + \varphi)$$

where,

*V* is the magnitude of the corresponding converter voltage output phase waveform $V_a$, $V_b$, and $V_c$ from which the respective symmetrical sequence terms and respective time-varying waveform are derived;

ω*t* is the instantaneous time-varying phase associated with the reference power frequency ω; and

φ is the offset in converter output AC voltage required to allow the converter to provide a correct amount of AC current.

In this manner the time-varying conversion element 48 is configured to combine the sine and cosine instantaneous reference terms 50, 52 with a matrix multiplication operation 54, 56, to convert the symmetrical sequence terms into respective real time-varying waveforms 58, 60, 62 corresponding to each of the three converter voltage output phase waveforms $V_a$, $V_b$, $V_c$, respectively (as illustrated schematically in Figure 6). Each time-varying waveform 58, 60, 62 varies with respect to time at a frequency equal to the instantaneous reference power frequency ω*t* plus the offset φ.

The second module 48B of the time-varying conversion element 48 converts the positive *p* and negative *n* terms of the sets of symmetrical sequence terms into respective imaginary time-varying waveforms 68, 70, 72 according to the formula:

$$x_I = \left[ \begin{bmatrix} 0 & 1 & 0 & 1 \\ -\frac{\sqrt{3}}{2} & -\frac{1}{2} & \frac{\sqrt{3}}{2} & -\frac{1}{2} \\ \frac{\sqrt{3}}{2} & -\frac{1}{2} & -\frac{\sqrt{3}}{2} & -\frac{1}{2} \end{bmatrix} \cos(\omega t) + \begin{bmatrix} 1 & 0 & 1 & 0 \\ -\frac{1}{2} & \frac{\sqrt{3}}{2} & -\frac{1}{2} & -\frac{\sqrt{3}}{2} \\ -\frac{1}{2} & -\frac{\sqrt{3}}{2} & -\frac{1}{2} & \frac{\sqrt{3}}{2} \end{bmatrix} \sin(\omega t) \right] \cdot \begin{bmatrix} x_d^p \\ x_q^p \\ x_d^n \\ x_q^n \end{bmatrix}$$

where,

$x_I$ is a respective imaginary time-varying waveform 68, 70, 72;

ω*t* is the instantaneous time-varying phase associated with the reference power frequency ω;

$x_d^p$ is the direct positive sequence term +*d* of the symmetrical sequence;

$x_q^p$ is the quadrature positive sequence term +*q* of the symmetrical sequence;

$x_d^n$ is the direct negative sequence term - *d* of the symmetrical sequence; and

$x_q^n$ is the quadrature negative sequence term $-q$ of the symmetrical sequence.

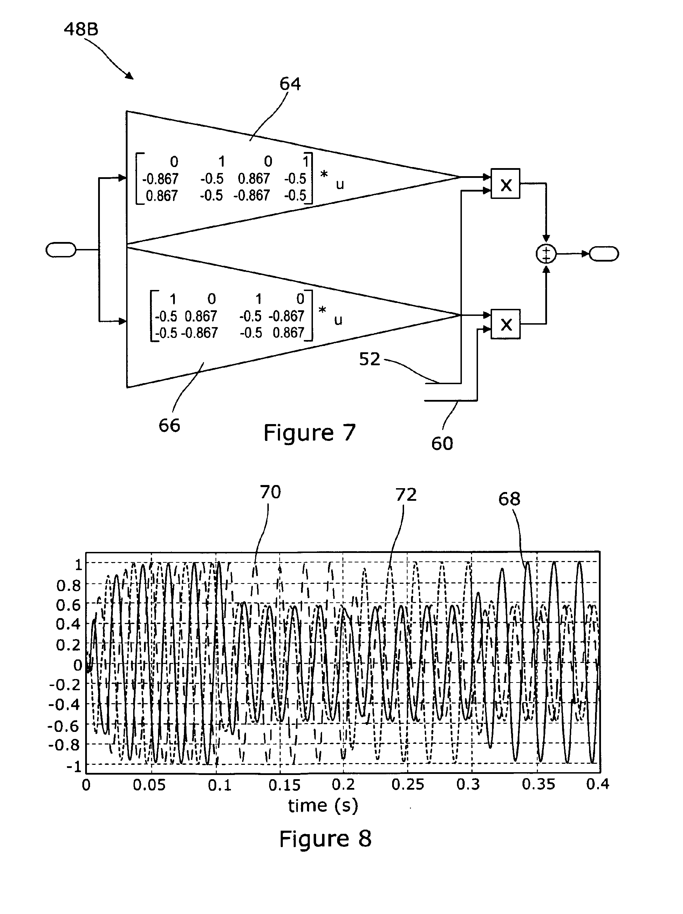

Figure 7 illustrates schematically a practical manner in which such conversion may be achieved, with the sine and cosine instantaneous reference terms 50, 52, i.e. $\sin(\omega t)$ and $\cos(\omega t)$, again being provided by a conventional Phase Locked Loop (PLL) monitor.

In the foregoing manner, it can be seen that the second module 48B also utilises only instantaneous references terms, and more particularly only sine and cosine instantaneous reference terms 50, 52, when carrying out the conversion to respective imaginary time-varying waveforms 68, 70, 72.

Moreover, Figure 7 additionally shows that the second module 48B combines the cosine instantaneous reference term 52 with a third matrix multiplication operation 64, and the sine instantaneous reference term 50 with a fourth matrix multiplication operation 66 when converting the symmetrical sequence terms into the respective imaginary time-varying waveforms 68, 70, 72.

Utilising the conversion formula set out above results in the second module 48B of the time-varying conversion element 48 converting the positive $p$ and negative $n$ terms of the sets of symmetrical sequences into respective imaginary time-varying waveforms 68, 70, 72 of the form

$$x_{waveform} = V \sin(\omega t + \varphi)$$

where,

V is the magnitude of the corresponding converter voltage output phase waveform $V_a$, $V_b$, and $V_c$ from which the respective symmetrical sequence terms and respective time-varying waveform are derived;

$\omega t$ is the instantaneous time-varying phase associated with the reference power frequency $\omega$; and

$\varphi$ is the offset in converter output AC voltage required to allow the converter to provide a correct amount of AC current.

In this manner the second module 48B of the time-varying conversion element 48 is again configured to combine the sine and cosine instantaneous reference terms 50, 52 with a matrix multiplication operation 64, 66, to convert the symmetrical sequence terms into respective imaginary time-varying waveforms 68, 70, 72 corresponding to each of the three converter output phase waveforms $V_a$, $V_b$, $V_c$, respectively (as illustrated schematically in Figure 8). Each time-varying waveform 68, 70, 72 similarly varies with respect to time at a frequency equal to the instantaneous reference power frequency $\omega t$ plus the offset $\varphi$.

Returning to the distortion element 46 shown in Figure 2, it also includes a manipulation element 74 that is configured to carry out non-trigonometric manipulation of the time-varying waveforms 58, 60, 62, 68, 70, 72 to introduce the said harmonic distortion into the generated voltage demand waveforms $v_a$ $v_b$, and $v_c$.

The manipulation element 74 includes a scaling module 76 which is configured to combine the corresponding real and imaginary time-varying waveforms 58, 60, 62, 68, 70, 72 produced by the time-varying conversion element 48 for a given phase $a$, $b$, $c$ and convert them into a single scalar waveform representative of the magnitude of the corresponding converter voltage output phase waveform $V_a$, $V_b$, and $V_c$ from which the respective real and imaginary time-varying waveforms 58, 60, 62, 68, 70, 72 are derived.

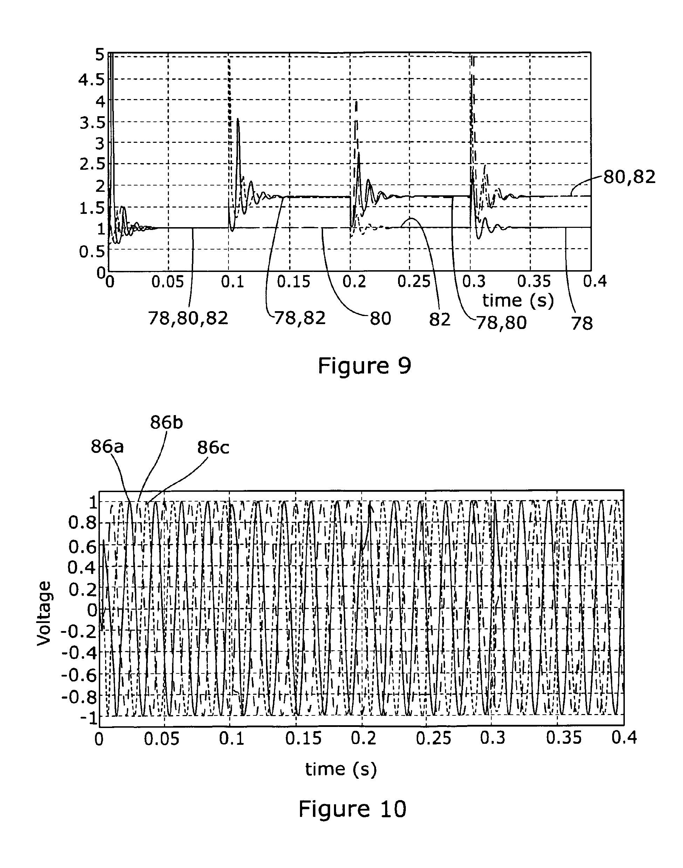

More particularly the scaling module 76 establishes the magnitude of the real and imaginary time-varying waveforms for each phase $a$, $b$, $c$, i.e. waveforms 58, 68 (phase $a$); waveforms 60, 70 (phase $b$); and waveforms 62, 72 (phase $c$), and inverts this value to obtain a single scalar factor which it represents as a single scalar waveform 78, 80, 82, i.e. a single corresponding scalar voltage profile, corresponding to each phase $a$, $b$, $c$ (as shown in Figure 9).

The scaling module 76 also preferably includes a limit function prior to the inverting operation mentioned above where a minimum positive value is specified, e.g. of nominally 1% of the normal operating value, in order to ensure the scaling module 76 is always able to carry out the said inverting operation.

The manipulation element 74 also includes a manipulating module 84 that is configured to:

(i) combine a respective imaginary time-varying waveform 68, 70, 72 with the corresponding scalar waveform 78, 80, 82 to generate a respective first output waveform 86a, 86b, 86c, for each phase, of the form

$$v_{output\,waveform} = \sin(\omega t + \varphi)$$ (as shown in Figure 10);

(ii) further modify the first output waveform 86 via multiplication and addition only to generate a respective modified output waveform 88a, 88b, 88c, for each phase, of the form

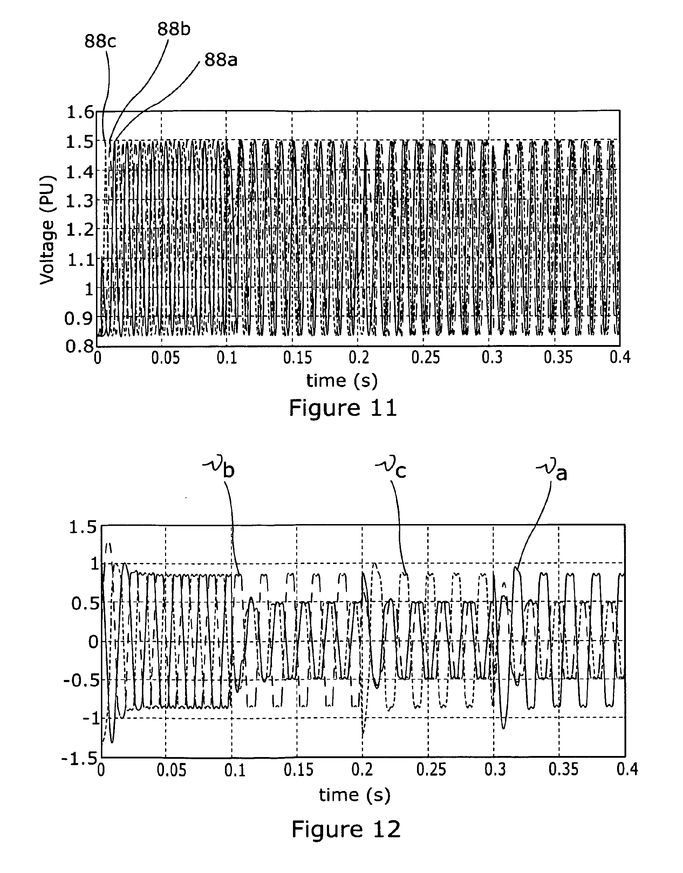

$$v_{modified\ waveform} = \frac{5}{6} + \frac{2}{3}\ \sin^2(\omega t + \varphi) \text{ (as shown in Figure 11);}$$

and

(iii) combine the modified output waveform with the corresponding respective real time-varying waveform 58, 60, 62 to generate a respective distorted voltage demand waveform $v_a$, $v_b$, $v_c$ of the form

$$v_{demand\ waveform} = V\left[\cos(\omega t + \varphi) + \frac{1}{6}\cos(3(\omega t + \varphi))\right].$$

In this way the manipulating module 84 generates a distorted voltage demand waveform $v_a$, $v_b$, $v_c$, as illustrated in Figure 12, which includes a third harmonic distortion, i.e. $\cos(3(\omega t + \varphi))$, with a magnitude of $\frac{1}{6}$ that ensures it optimises the impact on the possible increase of the fundamental voltage waveform of the converter, and hence optimises the associated reduction in conduction losses.

The manipulating module 84 is additionally configured to (not shown):

(iv) combine a respective real time-varying waveform 58, 60, 62 with the corresponding scalar waveform 78, 80, 82 to generate a further output waveform of the form

$$v_{further\ output\ waveform} = \cos(\omega t + \varphi).$$

which is useful in controlling other aspects of the converter operation.

**Claims**

1. A controller, for controlling a multiphase voltage source converter, comprising a vector control module configured to generate multiphase voltage demand waveforms that the voltage source converter subsequently is required to provide, the vector control module generating the multiphase voltage demand waveforms from respective converter voltage output phase waveforms measured at corresponding AC outputs of the voltage source converter, the vector control module including:

   a transformation element configured to transform the respective converter voltage output phase waveforms into symmetrical sequence rotating reference frame terms; and
   a distortion element configured to introduce harmonic distortion into the generated multiphase demand waveforms, the distortion element including:

      a time-varying conversion element configured to convert the symmetrical sequence terms directly into respective time-varying waveforms; and
      a manipulation element configured to carry out non-trigonometric manipulation of the time-varying waveforms to introduce the said harmonic distortion into the generated multiphase voltage demand waveforms.

2. A controller according to Claim 1 wherein the time-varying conversion element is configured to utilise only instantaneous reference terms when converting the symmetrical sequence terms into respective time-varying waveforms.

3. A controller according to Claim 2 wherein the time-varying conversion element is configured to utilise only sine and cosine instantaneous reference terms when converting the symmetrical sequence terms into the respective time-varying waveforms.

4. A controller according to Claim 3 wherein the time-varying conversion element is configured to combine the sine and cosine instantaneous reference terms with a matrix multiplication operation to convert the symmetrical sequence terms into the respective time-varying waveforms.

5. A controller according to Claim 4 wherein the time-varying conversion element is configured to combine the sine and cosine instantaneous reference terms with a matrix multiplication operation to convert the symmetrical sequence terms into respective time-varying waveforms which vary with respect to time at a frequency equal to an instantaneous reference power frequency plus an offset.

6. A controller according to Claim 5 wherein the time-varying conversion element is configured to convert the symmetrical sequence terms into at least a group of real time-varying waveforms.

7. A controller according to Claim 6 wherein the time-varying conversion element is configured to convert at least the positive and negative terms of the symmetrical sequence into respective real time-varying waveforms according to the formula:

$$X_R = \left[ \begin{bmatrix} 1 & 0 & 1 & 0 \\ -\dfrac{1}{2} & \dfrac{\sqrt{3}}{2} & -\dfrac{1}{2} & -\dfrac{\sqrt{3}}{2} \\ -\dfrac{1}{2} & -\dfrac{\sqrt{3}}{2} & -\dfrac{1}{2} & \dfrac{\sqrt{3}}{2} \end{bmatrix} \cos(\omega t) + \begin{bmatrix} 0 & -1 & 0 & -1 \\ \dfrac{\sqrt{3}}{2} & \dfrac{1}{2} & -\dfrac{\sqrt{3}}{2} & \dfrac{1}{2} \\ -\dfrac{\sqrt{3}}{2} & \dfrac{1}{2} & \dfrac{\sqrt{3}}{2} & \dfrac{1}{2} \end{bmatrix} \sin(\omega t) \right] \cdot \begin{bmatrix} x_d^p \\ x_q^p \\ x_d^n \\ x_q^n \end{bmatrix}$$

where,

$x_R$ is a respective real time-varying waveform;

$\omega t$ is the instantaneous time-varying phase associated with the reference power frequency $\omega$;

$x_d^p$ is the direct positive sequence term of the symmetrical sequence;

$x_q^p$ is the quadrature positive sequence term of the symmetrical sequence;

$x_d^n$ is the direct negative sequence term of the symmetrical sequence; and

$x_q^n$ is the quadrature negative sequence term of the symmetrical sequence.

8. A controller according to Claim 7 wherein the time-varying conversion element is configured to convert at least the positive and negative terms of the symmetrical sequence into respective real time-varying waveforms of the form

$$x_{waveform} = V \cos(\omega t + \varphi)$$

where,

$V$ is the magnitude of the corresponding output converter voltage output phase waveform from which the respective symmetrical sequence terms and respective time-varying waveform are derived;

$\omega t$ is the instantaneous time-varying phase associated with the reference power frequency $\omega$; and

$\varphi$ is the offset in converter output AC voltage required to allow the converter to provide a correct amount of AC current.

9. A converter according to any of Claims 6 to 8 wherein the time-varying conversion element is additionally configured to convert the symmetrical sequence terms into a group of imaginary time-varying waveforms.

10. A controller according to Claim 9 wherein the time-varying conversion element is configured to convert at least the positive and negative terms of the symmetrical sequence into respective imaginary time-varying waveforms according to the formula:

$$x_I = \left[ \begin{bmatrix} 0 & 1 & 0 & 1 \\ -\dfrac{\sqrt{3}}{2} & -\dfrac{1}{2} & \dfrac{\sqrt{3}}{2} & -\dfrac{1}{2} \\ \dfrac{\sqrt{3}}{2} & -\dfrac{1}{2} & -\dfrac{\sqrt{3}}{2} & -\dfrac{1}{2} \end{bmatrix} \cos(\omega t) + \begin{bmatrix} 1 & 0 & 1 & 0 \\ -\dfrac{1}{2} & \dfrac{\sqrt{3}}{2} & -\dfrac{1}{2} & -\dfrac{\sqrt{3}}{2} \\ -\dfrac{1}{2} & -\dfrac{\sqrt{3}}{2} & -\dfrac{1}{2} & \dfrac{\sqrt{3}}{2} \end{bmatrix} \sin(\omega t) \right] \cdot \begin{bmatrix} x_d^p \\ x_q^p \\ x_d^n \\ x_q^n \end{bmatrix}$$

where,

$x_I$ is a respective imaginary time-varying waveform;

$\omega t$ is the instantaneous time-varying phase associated with the reference power frequency $\omega$;

$x_d^p$ is the direct positive sequence term of the symmetrical sequence;

$x_q^p$ is the quadrature positive sequence term of the symmetrical sequence;

$x_d^n$ is the direct negative sequence term of the symmetrical sequence; and

$x_q^n$ is the quadrature negative sequence term of the symmetrical sequence.

11. A controller according to Claim 10 wherein the time-varying conversion element is configured to convert at least the positive and negative terms of the symmetrical sequence into respective imaginary time-varying waveforms of the form

$$x_{waveform} = V \sin(\omega t + \varphi)$$

where,

$V$ is the magnitude of the corresponding output converter voltage output phase waveform from which the respective symmetrical sequence terms and respective time-varying waveform are derived;

$\omega t$ is the instantaneous time-varying phase associated with the reference power frequency $\omega$; and

$\varphi$ is the offset in converter output AC voltage required to allow the converter to provide a correct amount of AC current.

12. A controller according to any of Claims 9 to 11 wherein the manipulation element includes a scaling module configured to combine respective corresponding real and imaginary time-varying waveforms produced by the time-varying conversion element and convert them into a single scalar waveform representative of the magnitude of the corresponding converter voltage output phase waveform from which the respective real and imaginary time-varying waveforms are derived.

13. A controller according to Claim 12 wherein the manipulation element also includes a manipulating module which is configured to:

(i) combine a respective imaginary time-varying waveform with the corresponding scalar waveform to generate a first output waveform of the form

$$v_{output\ waveform} = \sin(\omega t + \varphi);$$

(ii) further modify the first output waveform via multiplication and addition only to generate a modified output waveform of the form

$$v_{modified\ waveform} = \frac{5}{6} + \frac{2}{3}\sin^2(\omega t + \varphi);$$

and
(iii) combine the modified output waveform with the corresponding respective real time-varying waveform to generate a respective distorted voltage demand waveform of the form

$$v_{demand\ waveform} = V\left[\cos(\omega t + \varphi) + \frac{1}{6}\cos(3(\omega t + \varphi))\right].$$

14. A controller according to Claim 13 wherein the manipulating module is additionally configured to:

(iv) combine a respective real time-varying waveform with the corresponding scalar waveform to generate a further output waveform of the form

$$v_{further\ output\ waveform} = \cos(\omega t + \varphi).$$

15. A voltage source converter including a controller according to any preceding claim.

16. A power transmission network including a voltage source converter according to Claim 15.

Figure 1

Figure 2

Figure 3(a)

Figure 3(b)

Figure 4

$$\begin{bmatrix} 1 & 0 & 1 & 0 \\ -0.5 & 0.867 & -0.5 & -0.867 \\ -0.5 & -0.867 & -0.5 & 0.867 \end{bmatrix} * u$$

$$\begin{bmatrix} 0 & -1 & 0 & -1 \\ 0.867 & 0.5 & -0.867 & 0.5 \\ 0.867 & 0.5 & 0.867 & 0.5 \end{bmatrix} * u$$

Figure 5

time (s)

Figure 6

Figure 7

time (s)

Figure 8

Figure 9

Figure 10

Figure 11

Figure 12

**EP 2 894 778 A1**

Europäisches Patentamt
European Patent Office
Office européen des brevets

## EUROPEAN SEARCH REPORT

Application Number

EP 14 27 5007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 883 796 A (CHENG PO-TAI [US] ET AL) 16 March 1999 (1999-03-16) * column 4, line 41 - line 42 * * column 6, line 5 - line 16 * * figures 1, 2, 16a-c, 17b, 32 * | 1-16 | INV. H02M1/12 H02M7/48 ADD. H02J3/36 H02M7/5387 |
| A | US 2012/262957 A1 (YAMADA TOSHIYA [JP] ET AL) 18 October 2012 (2012-10-18) * figure 1 * * paragraphs [0002], [0006], [0007], [0008] * | 1-16 | |
| A | KR 2013 0077679 A (SINOK TECH CO LTD [KR]) 9 July 2013 (2013-07-09) * figure 1 * | 1-16 | |
| A | CN 102 780 387 A (UNIV ZHEJIANG) 14 November 2012 (2012-11-14) * figure 2 * | 1-16 | |
| A | LIANG J ET AL: "Evaluation of repetitive control for power quality improvement of distributed generation", POWER ELECTRONICS SPECIALISTS CONFERENCE; [ANNUAL POWER ELECTRONICS SPECIALISTS CONFERENCE],, vol. 4, 23 June 2002 (2002-06-23), pages 1803-1808, XP010596011, ISBN: 978-0-7803-7262-7 * Appendix A * | 1-16 | TECHNICAL FIELDS SEARCHED (IPC) H02M H02J |

-/--

The present search report has been drawn up for all claims

| Place of search | Date of completion of the search | Examiner |
|---|---|---|
| Munich | 30 July 2014 | Bartal, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 14 27 5007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOPAL MONDAL ET AL: "Design and simulation of a modular multi-level converter for MVDC application", INDUSTRIAL ELECTRONICS (ISIE), 2011 IEEE INTERNATIONAL SYMPOSIUM ON, IEEE, 27 June 2011 (2011-06-27), pages 200-205, XP032019068, DOI: 10.1109/ISIE.2011.5984157 ISBN: 978-1-4244-9310-4 * figure 5 * | 1-16 | |

-----

**TECHNICAL FIELDS
SEARCHED     (IPC)**

The present search report has been drawn up for all claims

| Place of search | Date of completion of the search | Examiner |
|---|---|---|
| Munich | 30 July 2014 | Bartal, P |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

**ANNEX TO THE EUROPEAN SEARCH REPORT
ON EUROPEAN PATENT APPLICATION NO.**

EP 14 27 5007

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2014

| Patent document cited in search report | | Publication date | Patent family member(s) | | Publication date |
|---|---|---|---|---|---|
| US 5883796 | A | 16-03-1999 | NONE | | |
| US 2012262957 | A1 | 18-10-2012 | CN | 102457204 A | 16-05-2012 |
| | | | JP | 2012085482 A | 26-04-2012 |
| | | | US | 2012262957 A1 | 18-10-2012 |
| KR 20130077679 | A | 09-07-2013 | NONE | | |
| CN 102780387 | A | 14-11-2012 | NONE | | |

EPO FORM P0459

For more details about this annex : see Official Journal of the European Patent Office, No. 12/82